# EUROPEAN PATENT APPLICATION

(11) **EP 1 764 267 A1**
(43) Date of publication of application: **21.03.2007**
(21) Application number: 05020273.8
(22) Date of filing: 16.09.2005
(51) Int. Cl.: B60R 11/02

(54) **Angle-adjusting apparatus for a housing of a headrest display**

(71) Applicant: Hexa-Chain Co., Ltd, PingJen City, Tao Yuan Hsien (TW)
(72) Inventor: Huang, Fu-Ruei, PingJen City Taoyuan Hsien (TW)
(74) Representative: Casalonga, Axel

(57) **Abstract**

An angle-adjusting apparatus for a housing of a headrest display, comprising an external housing (50) having an opening at the outer side thereof, a cavity (51) being formed and two sleeves (52) being symmetrically arranged at both sides thereof, a spring element (53) being provided at a top and a bottom side of the cavities (51), the spring element (53) having a first projecting rib (531) longitudinally extending at an internal side thereof; an internal housing (60) having a front and a rear portion (61,62) with an internal room for installing a display (40), a groove (64) and two positioning sleeves (65) corresponding to the cavities (51) of the external housing (50) being disposed at both sides of the internal housing (60), the internal housing (60) further having a plurality of second projecting ribs (66) at a position corresponding to the spring element (53); and a left link element (70L) and a right link element (70R) formed in a symmetric manner and received within the cavities (51) of the external housing (50), respectively. Each of the left and right link elements (70L,70R) includes an external and internal link portion (71,72) both of which are locked on the external and internal housings (60,50), respectively, for a pivotal connection. And the joining end is limited to the lowest point so that a room is reserved to install the display in the small headrest. Moreover, the contact at both sides includes a plurality of engaging and positioning points to allow for a precise angle-adjustment and to protect from loosening due to the rocking action when driving. Accordingly, an optimal view angle can be achieved.

## Description

The invention relates to an angle-adjusting apparatus for a housing of a headrest display, and more particularly to a housing that is adapted to the headrest in an automobile to allow for a fine adjustment of the view angle.

For the recent years, miniaturization features the developments of the display. The LCD displays have been widely installed in the automobiles. If the display is mounted at the front side of the automobile, it usually mounted on the top of the front panel of the car or embedded therein. The display is pulled out when used. If the display is installed in the area of the rear seat, it will be usually installed at the center handrail of the front seat or under the roof, and the display can be pulled out of the roof when used.

If the display is installed under the roof for the rear seat passengers, the rearview mirror can't provide the driver with a complete view of the area behind the vehicle when driving. If the display is installed at the center handrail of the front seat, it will make the limited space of the rear seat even smaller.

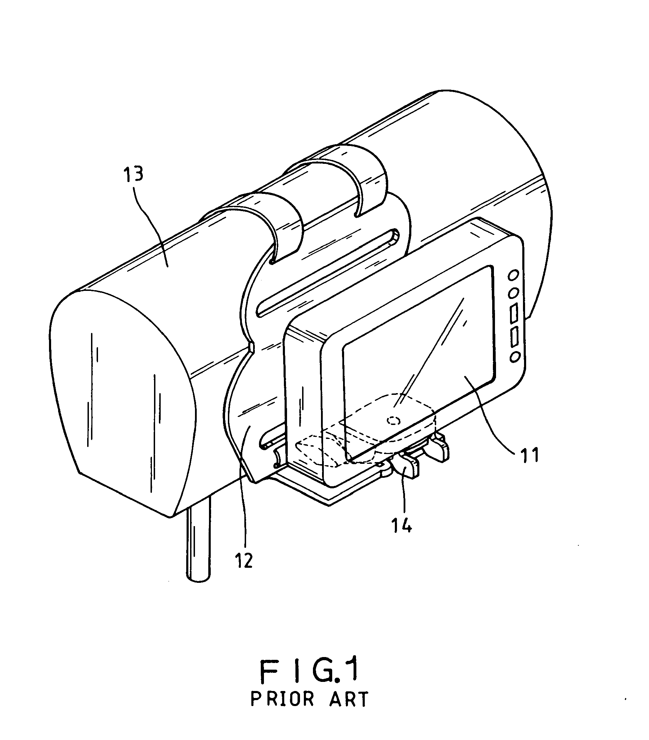

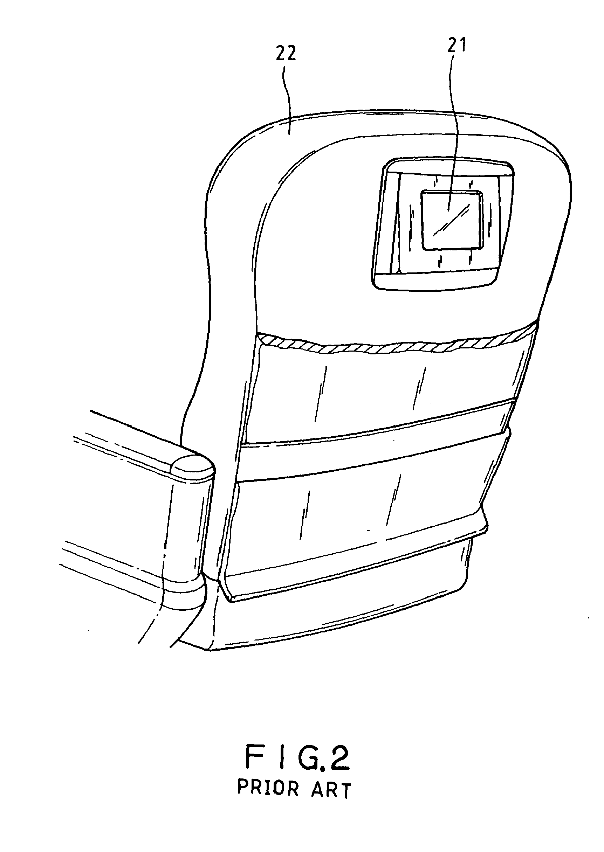

As shown in FIG. 1, TW 520723 discloses a headrest display 11 that is fixed on a headrest 13 of the front seat by a positioning apparatus 12. Meanwhile, the view angle of the headrest display 11 can be adjusted by an adjusting apparatus 14. However, the headrest display 11 protrudes from the rear surface of the headrest 13, thereby occupying much space and affecting the whole appearance inside the car.

As shown in FIGS. 2 and 3, US 5,507,556 discloses a display 21 that is embedded in the back rest 22. A shift plate 23 is provided within the back rest 22 for fixing the display 21 in place. Both sides of the top of the shift plate 23 are pivotally coupled to two projecting ears 24 within the back rest 22. Thus, an angle adjustment of the shift plate 23 can be ensured by use of the projecting ears 24 at the top side thereof. However, the adjustment requires a built-in cable wire 25 and other components. Meanwhile, the back rest 22 has to be tilted backward for angle adjustment of the display 21. Therefore, the rear seat passengers can't directly adjust the view angle of the display 21. So, this conventional apparatus is more suitable for the application to the seats of airplanes, but not for the seat of automobiles. Moreover, the display 21 can't be removed for use elsewhere, thereby limiting the range of its use.

The applicant of the invention discloses a similar apparatus titled "VIEW ANGLE ADJUSTABLE DETACHABLE DISPLAY ASSEMBLY" in US 20050140845. It teaches a display installed at the rear side of the headrest of the front seat. When the display is used by the rear seat passenger, it doesn't occupy much space and won't affect the view of the area behind the vehicle via the rear-view mirror. This prior art comprises mainly an external housing, an internal housing and a display. Meanwhile, it is characterized in that the internal housing can be turned at an angle within the external housing. Moreover, the display can be removed out of the internal housing. However, the assembly and the space arrangement of the internal and external housings leave still much to be desired. Accordingly, the dimensions of the external housing can't be reduced for the installation of the display on a smaller headrest in a European automobile. In addition, means for adjusting the view angle by turning the internal housing is too simple. After use for a certain period, the mechanism is easily loosened, thereby affecting the angle-adjusting precision and lowering the service life of this apparatus.

In view of the foregoing shortcomings of the prior art, the inventor of the present invention conducted extensive experiments and tests to overcome the shortcomings and to achieve the installation of the housing on the rear side of a small type headrest.

A primary object of the invention to provide an angle-adjusting apparatus for a housing of a headrest display that can be embedded in a rear side of a headrest and allow for a convenient adjustment of the display upward or downward for achieving an optimal view angle.

Another object of the present invention to provide an angle-adjusting apparatus for a housing of a headrest display that includes a plurality of positioning mechanisms to allow for an accurate adjustment of the view angle. In addition, the apparatus won't be loosened after used for a certain period or when driving on an uneven road, thereby prolonging the service life of the apparatus.

In order to achieve the above-mentioned objects, an angle-adjusting apparatus for a housing of a headrest display comprises:
a) an external housing having an opening at the outer side thereof, a cavity being formed and two sleeves being symmetrically arranged at both sides thereof, a spring element being provided at a top and a bottom side of the cavities, the spring element having a first projecting rib longitudinally extending at an internal side thereof;
b) an internal housing having a front and a rear portion with an internal room for installing a display, a groove and two positioning sleeves corresponding to the cavities of the external housing being disposed at both sides of the internal housing, the internal housing further having a plurality of second projecting ribs at a position corresponding to the spring element; and
c) a left link element and a right link element formed in a symmetric manner and received within the cavities of the external housing, respectively. Each of the left and right link elements includes an external and an internal link portion both of which are locked on the external and internal housings, respectively, for a pivotal connection. And the joining end is limited to the lowest point so that a room is reserved to install the display in the small headrest.

FIG. 1 is a perspective view of a prior art in accordance with TW 520723;
FIG. 2 is a perspective view of another prior art in accordance with US 5,507,556;
FIG. 3 is a perspective view of the internal structure of the prior art in accordance with US 5,507,556;
FIG. 4 is a perspective view of the invention that is embedded in a headrest of an automobile;
FIG. 5 is a perspective view of an angle-adjusting apparatus for a housing of a headrest display in accordance with the invention;
FIG. 6 is an exploded perspective view of an external and an internal housing in accordance with the invention;
FIG. 7 is an exploded perspective view of a left link element in accordance with the invention;
FIG. 8 is an exploded perspective view of the left link element in accordance with the invention that is seen from another side;
FIG. 9 is a schematic drawing of the assembly of the left link element in accordance with the invention;
FIG. 10 is a schematic drawing of the assembly of the left link element in accordance with the invention while the internal link portion is aligned with the external link portion;
FIG. 11 is an exploded perspective view of the external and internal housings in accordance with the invention that is seen from another side;
FIG. 12 is a perspective assembly view of the external and internal housings of FIG. 11;
FIG. 13 is a side view of the invention by turning the internal housing at a certain angle relative to the external housing; and
FIG. 14 is a side view of the invention by turning the internal housing at another angle relative to the external housing.

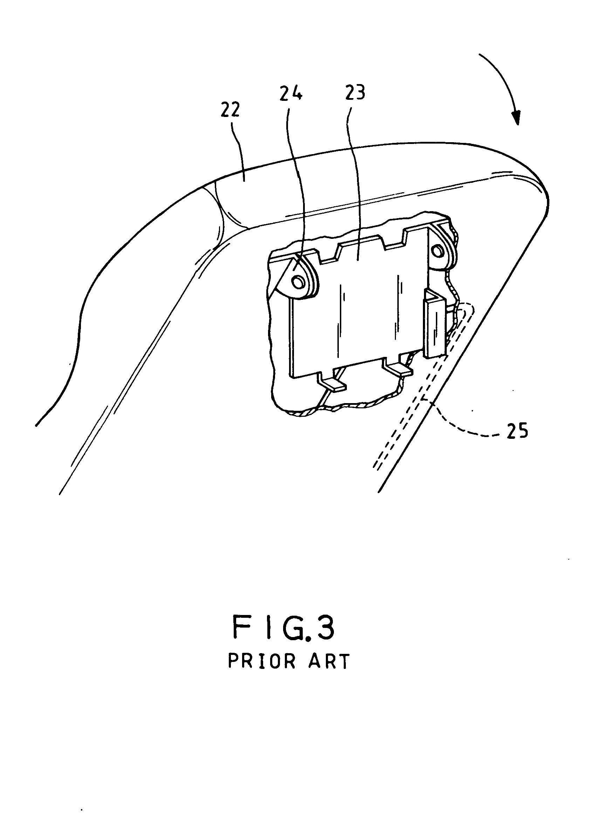

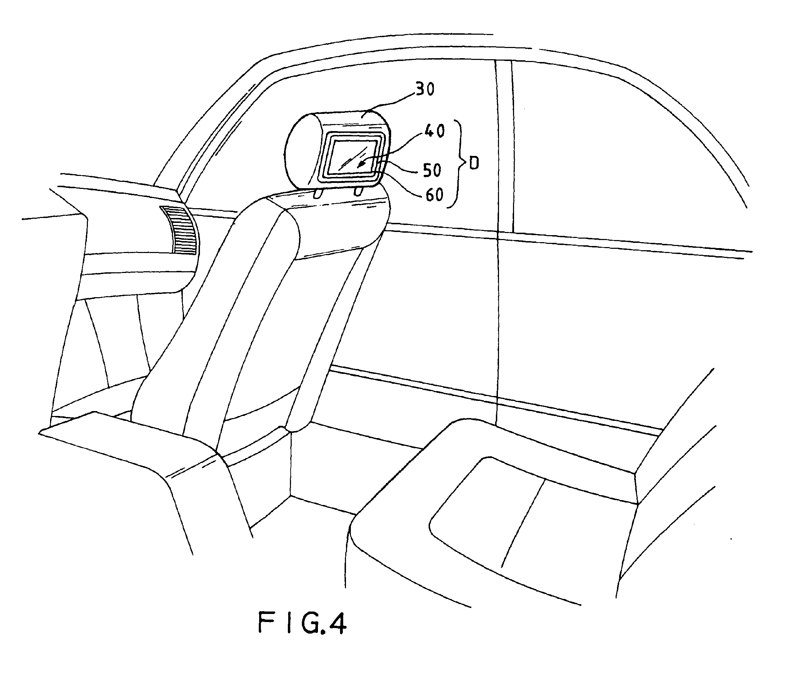

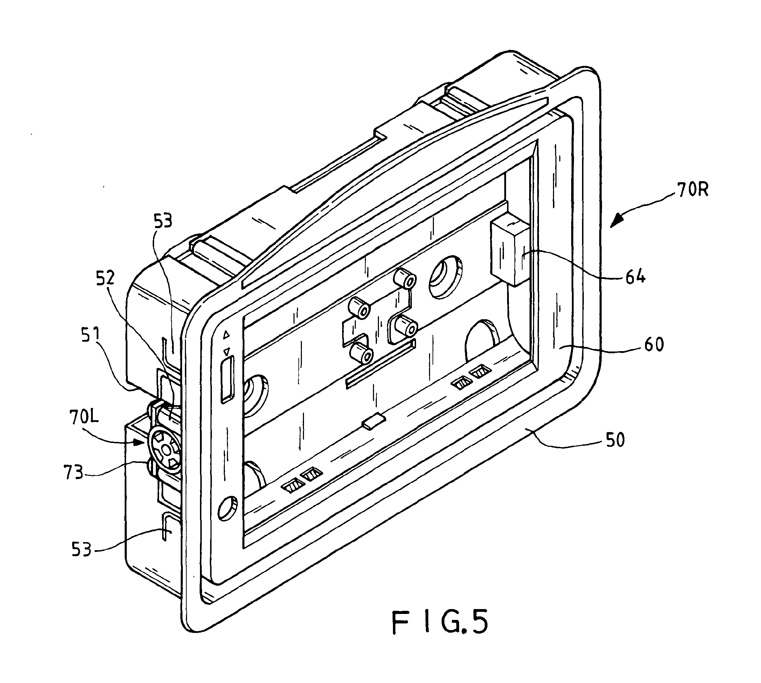

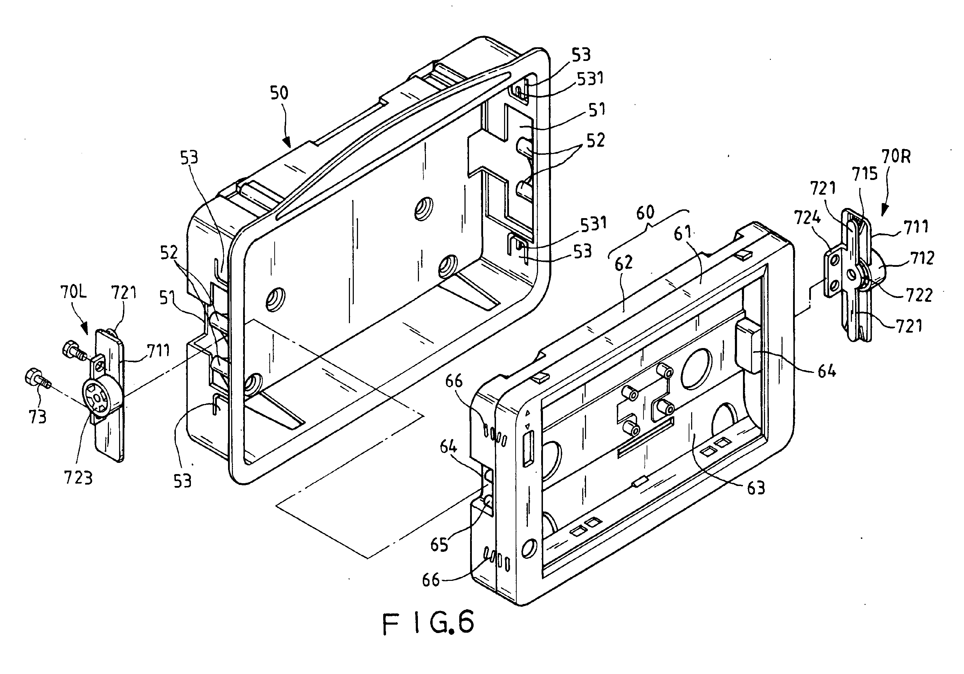

Referring to FIG. 4, a display module D in accordance with the present invention includes an LCD display 40, an external housing 50, and an internal housing 60 three of which are mounted on a rear side of a headrest 30. The LCD display 40 has its specific dimensions. The headrest 30 in the European car gets smaller and smaller. In order to install the original LCD display 40 in the headrest 30 and have the function of adjusting view angle, the key point of the improvement lies in the design of the assembly of the internal and external housings. The invention is characterized in the special turning type adjustment positioning structure of the internal and external housings. In a following embodiment, the external housing 50 and the internal housing 60 will be described in detail without the presence of the LCD display 40.
As shown in FIGS. 5 and 6, the invention includes:
an external housing 50 having an opening at the outer side thereof, a cavity being formed and two sleeves being symmetrically arranged at both sides thereof, a spring element 53 being provided at a top and a bottom side of the cavities 51, the spring element 53 having a first projecting rib 531 longitudinally extending at an internal side of the spring element 53 (see FIG. 6);
an internal housing 60 consisting of a front and a rear portion 61, 62, a recess 63 being formed in the front portion 61 for accepting the LCD display 40 (not shown in FIG. 6), a groove 64 and two positioning sleeves 65 corresponding to the cavities 51 of the external housing 50 being disposed at both sides of the internal housing 60, the internal housing 60 further having a plurality of second projecting ribs 66 at a position corresponding to the spring element 53, wherein the second projecting ribs 66 in accordance with the embodiment are arranged in such a fan type that the external side is wide and the internal side narrow, and wherein the first projecting rib 531 of the spring element 53 of the external housing 50 can engage into a gap between every two adjacent second projecting ribs 66; and
a left link element 70L and a right link element 70R formed in a symmetric manner and received within the cavities 51 of the external housing 50, respectively, each of the left and right link elements 70L, 70R having an external link portion 71 and an internal link portion 72.

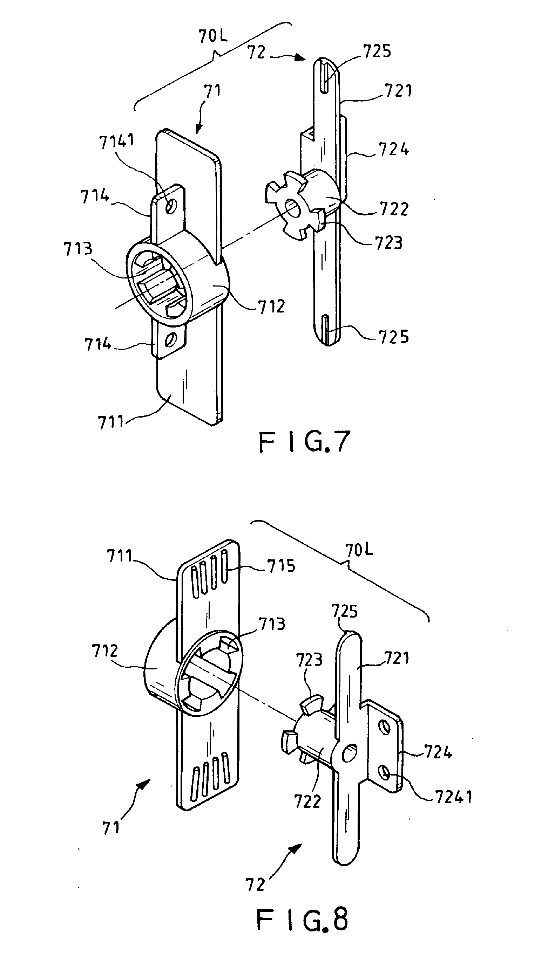

Since the left link element 70L and the right link element 70R have the same structure except that their opposite symmetric positions are different, only the left link element 70L is selected for further description with reference to FIGS. 7 through 10.

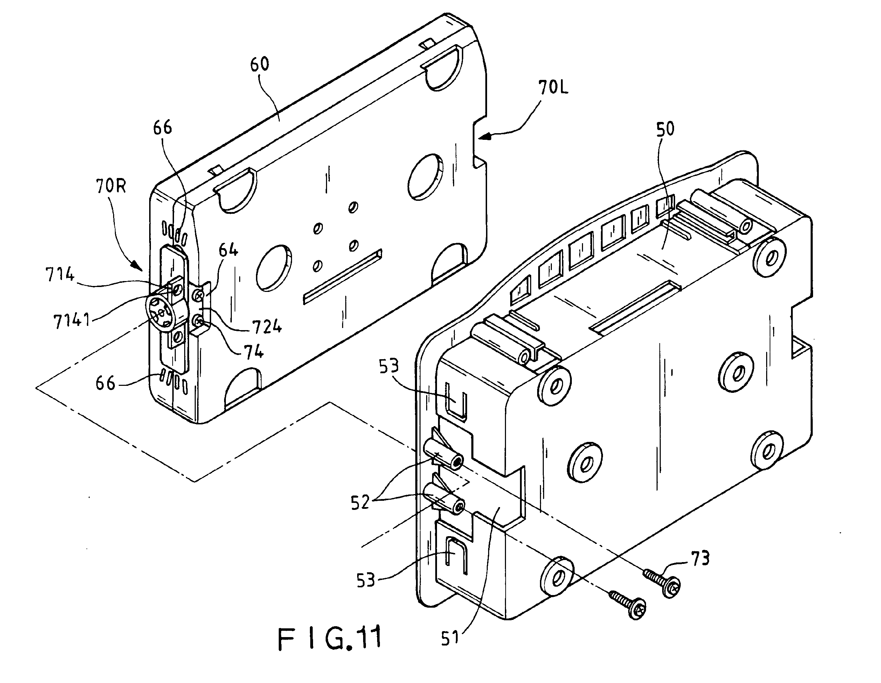

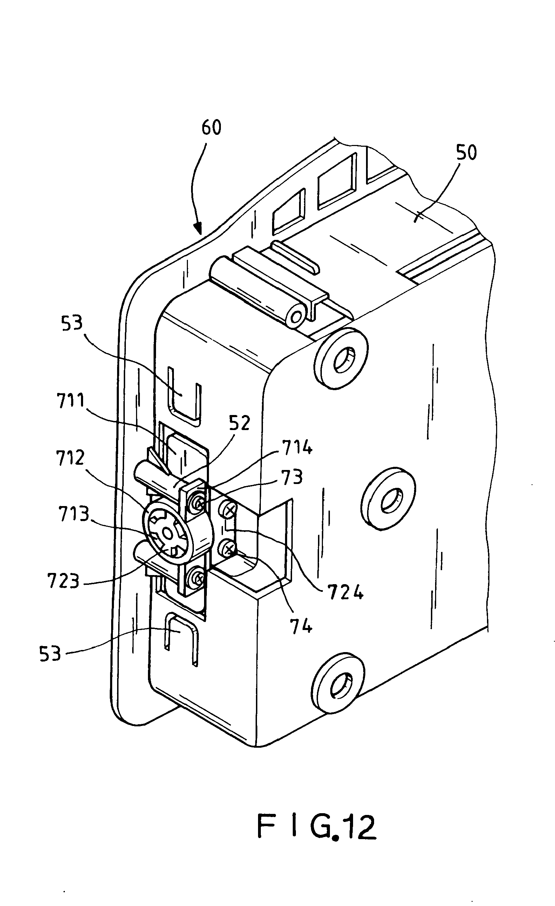

The external link portion 71 includes a wider strip 711 with a sleeve 712 outwardly projecting in the middle thereof. A plurality of axial insertion slots 713 is formed on the inner wall of the sleeve 712 while the outer wall of the sleeve 712 includes two first connection pieces 714 each with one fixing hole 7141 at one end thereof. The fixing holes 7141 correspond to the sleeves 52 of the external housing 50; therefore, the external link portion 71 can be fixed on the external housing 50 by screws 73, as shown in FIGS 5 and 6. FIGS. 11 and 12 illustrate how the other right link element 70R is secured to the external housing 50 and the internal housing 60. Referring back to FIGS. 7 and 8, the internal link portion 72 includes a narrower strip 721 with an external protrusion 722 extending outwardly. The external protrusion 722 includes a plurality of tongues 723 that are correspondingly engaged into the axial insertion slots 713 of the external link portion 71. Moreover, the narrower strip 721 further includes a second connecting piece 724 perpendicularly extending from an internal side thereof. A fixing hole 7241 is formed in the second connecting piece 724. Meanwhile, a fourth projecting rib 725 corresponding to a plurality of third projecting ribs 715 of the wider strip 711 is longitudinally formed on an external side of the internal link portion 72.

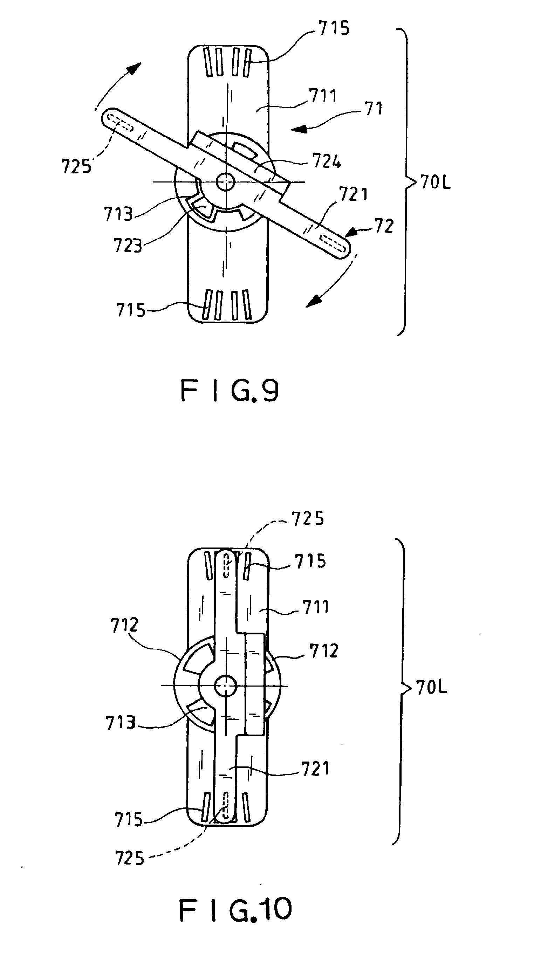

Further, as shown in FIGS. 9 and 10, the internal link portion 72 is inclined in such a manner that its tongues 723 can engage into the axial insertion slots 713 of the external link portion 71. By turning it at a certain angle, the internal link portion 72 is pivotally secured to the external side of the axial insertion slots 713. Thereafter, the narrower strip 721 is turned to an upright position such that it rests on an internal side of the wider strip 711. After assembly, the left link element 70L and the right link element 70R are illustrated in FIG. 6.

Still, as shown in FIGS. 11 and 12, the joined link elements are fitted to both sides of the internal housing 60. FIGS. 11 and 12 illustrate only the right link element 70R. The left link element 70L corresponds to the right link element 70R in a symmetric manner so that no further descriptions are given hereinafter. First of all, the second connecting piece 724 of the internal link portion 72 is locked by screws 74 in the groove 64 and the positioning sleeves (not shown in FIG. 11) of the internal housing 60. Then, the internal housing 60 is tilted in such a way that the left link element 70L and the right link element 70R fit into the cavities 51 of the external housing 50, respectively. Finally, the first connection pieces 714 are locked by screws 73 on the sleeves 52, respectively. In this way, the internal housing 60 is pivotally coupled to the inside of the external housing 50.

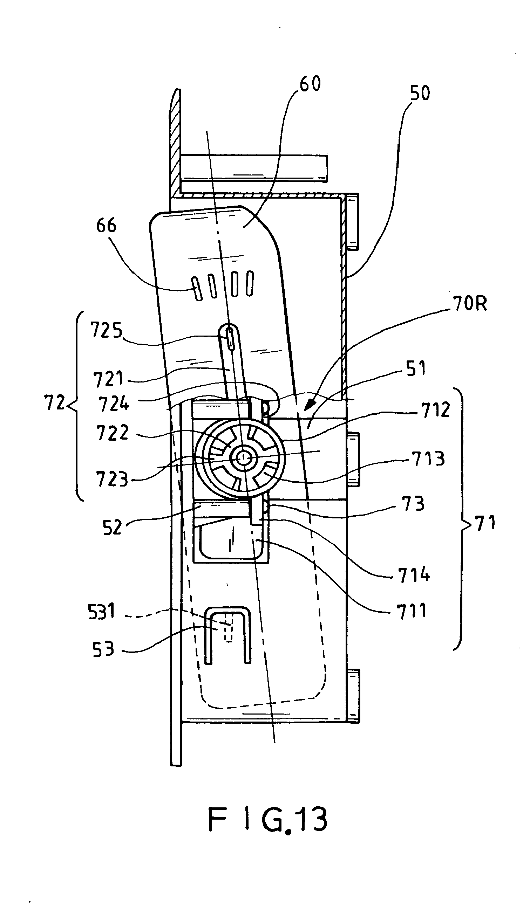

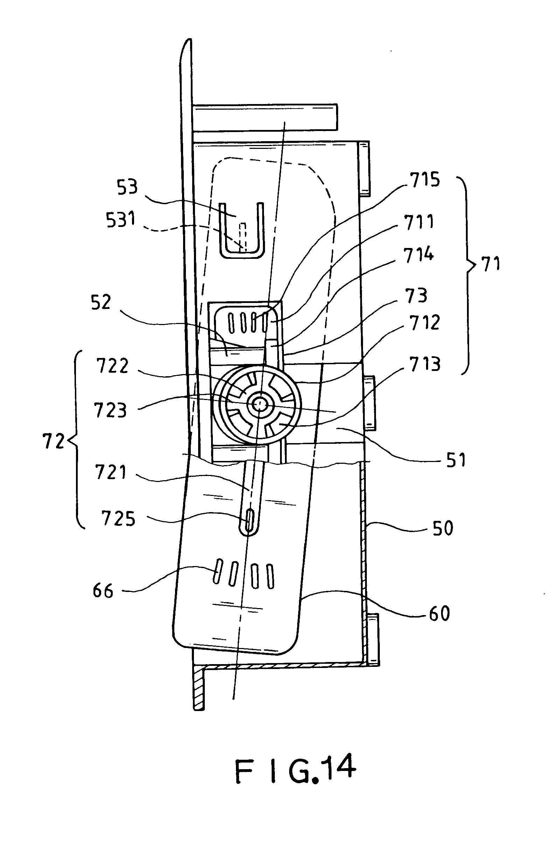

As shown in FIGS. 13 and 14, three positioning and adjusting mechanisms are present between the internal housing 60 and the external housing 50. The first positioning mechanism is that the external protrusion 722 of the internal link portion 72 locked within the internal housing 60 fits into the sleeve 712 of the external link portion 71 locked within the external housing 50. By turning the tongues 723 at one angle to engage on the external side of the axial insertion slots 713, the external link portion 71 and the internal link portion 72 are joined in place. The second positioning mechanism is that the gaps between the adjacent third projecting ribs 715 at the inner side of the wider strip 711 of the external link portion 71 are adapted to accept the longitudinal fourth projecting ribs 725 of the narrower strip 721 of the internal link portion 72, thereby creating a multi-stage positioning mechanism. The third positioning mechanism is that the second projecting ribs 66 are disposed at the top and bottom sides of the internal housing 60 in such a fan type that the external side is wide and the internal side narrow. Meanwhile, the gaps between every two adjacent second projecting ribs 66 can be used to lock the first projecting rib 531 of the spring element 53 on the external housing 50 in place. Thus, the above-mentioned positioning mechanisms can simultaneously work when the angle adjustment of the internal housing 60 receiving the display is made relative to the external housing 50. In this way, a high stability is ensured and a shaking action is avoided. Besides, the whole link structure is skillfully disposed within a space between the external housing 50 und the internal housing 60, thereby minimizing the dimensions of the whole structure for a smooth insertion of the display into the rear side of the headrest 30. In addition, the sample of the invention can be exactly fitted to the rear side of the headrest 30, thereby creating a convenient view angle adjusting mechanism.

Many changes and modifications in the above-described embodiment of the invention can, of course, be carried out without departing from the scope thereof. Accordingly, to promote the progress in science and the useful arts, the invention is disclosed and is intended to be limited only by the scope of the appended claims.

## Claims

1. An angle-adjusting apparatus for a housing of a headrest display, comprising:
a) an external housing (50) having an opening at the outer side thereof, a cavity being formed and two sleeves (52) being symmetrically arranged at both sides thereof, a spring element (53) being provided at a top and a bottom side of the cavities (51), the spring element (53) having a first projecting rib (531) longitudinally extending at an internal side thereof;
b) an internal housing (60) having a front and a rear portion (61), (62) with an internal room for installing a display (40), a groove (64) and two positioning sleeves (65) corresponding to the cavities (51) of the external housing (50) being disposed at both sides of the internal housing (60), the internal housing (60) further having a plurality of second projecting ribs (66) at a position corresponding to the spring element (53); and
c) a left link element (70L) and a right link element (70R) formed in a symmetric manner and received within the cavities (51) of the external housing (50), respectively, and each of the left and right link elements (70L), (70R) including;
i) an external link portion (71) having a wider strip (711) with a sleeve (712) outwardly projecting in the middle thereof, a plurality of axial insertion slots (713) being formed on the inner wall of the sleeve (712), the outer wall of the sleeve (712) including two first connection pieces (714) each with one fixing hole (7141) at one end thereof, the fixing holes (7141) corresponding to the sleeves (52) of the external housing (50) such that the external link portion (71) can be fixed on the external housing (50) by screws (73), a plurality of third projecting ribs (715) being disposed at a top and a bottom end of the inner side of the wider strip of the external link portion (71); and
ii) an internal link portion (72) having a narrower strip (721) with an external protrusion (722) extending outwardly, the external protrusion (722) including a plurality of tongues (723) that are correspondingly engaged into the axial insertion slots (713) of the external link portion (71) wherein, by turning the tongues (723) at a certain angle, the internal link portion (72) is pivotally secured to the external side of the axial insertion slots (713), and wherein the narrower strip (721) is turned to an upright position such that it rests on an internal side of the wider strip (711), and wherein a fourth projecting ribs (725) corresponding to the third projecting ribs (715) of the wider strip (711) is longitudinally formed on an external side of the internal link portion (72), and wherein the narrower strip (721) further includes a second connecting piece (724) perpendicularly extending from an internal side thereof, and wherein a fixing hole (7241) is formed in the second connecting piece (724), and wherein the second connecting pieces (724) corresponding to the positioning sleeves (65) of the internal housing (60) are fixed by screws (73) on the internal housing (60).

2. The angle-adjusting apparatus for a housing of a headrest display as recited in claim 1 wherein a plurality of second projecting ribs (66) is disposed at both sides of the internal housing (60) in such a fan type that the external side is wide and the internal side narrow, and wherein the gaps between every two adjacent second projecting ribs (66) are adapted to lock the first projecting rib (531) of the spring element (53) in place.

3. The angle-adjusting apparatus for a housing of a headrest display as recited in claim 1 wherein a plurality of third projecting ribs (715) is disposed at a top and a bottom end of the internal side of the external link portion (71) in such a fan type that the external side is wide and the internal side narrow, and wherein the gaps between every two adjacent third projecting ribs (715) are adapted to correspondingly lock the fourth projecting rib (725) of the narrower strip (721) in place.
